# EUROPEAN PATENT APPLICATION

(11) **EP 4 696 807 A1**
(43) Date of publication of application: **18.02.2026**
(21) Application number: 24814911.4
(22) Date of filing: 05.03.2024
(51) Int. Cl.: C23C 2/16, C22C 18/04, C23C 2/06

(54) **ZN-AL-MG-SI-BASED PLATED STEEL SHEET**

(30) Priority: 31.05.2023 JP 2023090145
(71) Applicant: JFE Steel Corporation, Tokyo, 100-0011 (JP)
(72) Inventor: FUJII, Norifumi, Tokyo 100-0011 (JP); SATO, Rinta, Tokyo 100-0011 (JP); MAKIMIZU, Yoichi, Tokyo 100-0011 (JP)
(74) Representative: Haseltine Lake Kempner LLP
(86) International application number: PCT/JP2024/008333
(87) International publication number: WO 2024/247424

(57) **Abstract**

Provided is a Zn-Al-Mg-Si coated steel sheet that has excellent appearance-related corrosion resistance and excellent dissimilar joined portion corrosion resistance at contact areas between a flat part or a worked part and an aluminum alloy. The Zn-Al-Mg-Si coated steel sheet includes a base steel sheet and a coated layer formed on at least one surface of the base steel sheet. The coated layer has a chemical composition containing, in mass%, Mg: 0.50 % to 3.00 %, Al: 0.10 % to 3.00 %, Si: 0.010 % to 0.20 %, and Fe: 0.30 % or less, with the balance being Zn and inevitable impurity, and a Zn-Al-MgZn₂ ternary eutectic alloy structure. In a reflected electron image at a magnification of 5000 times obtained by irradiating a surface of the coated layer with an electron beam at an accelerating voltage of 7.0 kV using a scanning electron microscope, needle-shaped Mg₂Si alloy phase having a major axis length of 0.5 µm or more is present in the Zn-Al-MgZn₂ ternary eutectic alloy structure at a number density of 100,000/mm² or more.

## Description

### TECHNICAL FIELD

The present disclosure relates to Zn-Al-Mg-Si coated steel sheets.

### BACKGROUND

Zinc coating that inhibits corrosion of iron through sacrificial protection has excellent rust resistance performance and is highly economical, and is widely used to produce steel material having high corrosion resistance. In particular, hot-dip galvanized steel material, in which a coated layer is formed by hot-dip galvanizing steel material, has a simpler production process and is cheaper than electrogalvanized steel material, and therefore demand is increasing across industries such as the automobile industry, the home appliance industry, and the building material industry. However, due to the worsening of air pollution and corrosion environments accompanying industrial sophistication, and the depletion of zinc resources due to a significant increase in zinc usage, there has been a demand for coated steel material that is more corrosion resistant than conventional zinc coated steel material and also requires less zinc.

Patent Literature (PTL) 1 describes a Zn-Al-Mg coated steel material in which elements such as aluminum (Al) and magnesium (Mg) are added to zinc (Zn) to improve the corrosion resistance of steel material. Further, PTL 2 reports that by adding silicon (Si) to a Zn-Al-Mg coated layer, the corrosion resistance of flat surface portions and end surface portions of a coated steel material is improved compared to that of a conventional Zn-Al-Mg coated steel sheet. Further, PTL 3 reports that by adding Si to a coated layer of a Zn-Al-Mg coated steel sheet and concentrating Si at the interface between the coated layer and the base steel sheet, fracture toughness is imparted to the coated layer and post-working corrosion resistance is improved.

### CITATION LIST

### Patent Literature

PTL 1: JP H04-147955 A
PTL 2: JP 2005-082834 A
PTL 3: JP 2021-508771 A

### SUMMARY

### (Technical Problem)

Further improvements are sought for appearance-related corrosion resistance and joined portion corrosion resistance of coated steel sheets. Further, as the use of aluminum alloy sheets and aluminum die castings in automotive bodies is increasing in order to drastically reduce the weight of automobiles, corrosion resistance at dissimilar joined portions between coated steel sheet members and aluminum alloy members has emerged as a new required property, and dissimilar joined portion corrosion resistance when joined with aluminum alloy components is desired.

In view of the above problems, it would be helpful to provide a Zn-Al-Mg-Si coated steel sheet that has excellent appearance-related corrosion resistance and dissimilar joined portion corrosion resistance at contact areas between a flat part or a worked portion and an aluminum alloy.

### (Solution to Problem)

In order to solve the aforementioned problems, the inventors conducted intensive studies and made the following discoveries. In a Zn-Al-Mg-Si coated steel sheet, the formation of a Mg₂Si alloy phase in the surface layer of the coated layer can improve the appearance-related corrosion resistance and the dissimilar joined portion corrosion resistance at contact areas between a flat part or a worked portion and an aluminum alloy. Further, when a coated steel sheet is produced, a mixed gas of H₂ and N₂ is used as wiping gas (gas used in gas wiping), so that the Mg₂Si alloy phase may be formed in the surface layer of the coated layer.

Primary features of the present disclosure are as follows.
[1] A Zn-Al-Mg-Si coated steel sheet comprising a base steel sheet and a coated layer formed on at least one surface of the base steel sheet, wherein
   the coated layer has a chemical composition containing (consisting of), in mass%, Mg: 0.50 % to 3.00 %, Al: 0.10 % to 3.00 %, Si: 0.010 % to 0.20 %, and Fe: 0.30 % or less, with the balance being Zn and inevitable impurity, and a Zn-Al-MgZn₂ ternary eutectic alloy structure, and
   in a reflected electron image at a magnification of 5000 times obtained by irradiating a surface of the coated layer with an electron beam at an accelerating voltage of 7.0 kV using a scanning electron microscope, needle-shaped Mg₂Si alloy phase having a major axis length of 0.5 µm or more is present in the Zn-Al-MgZn₂ ternary eutectic alloy structure at a number density of 100,000/mm² or more.
[2] The Zn-Al-Mg-Si coated steel sheet according to [1], wherein, in a reflected electron image at a magnification of 5000 times obtained by irradiating a surface of the coated layer with an electron beam at an accelerating voltage of 15.0 kV using a scanning electron microscope, needle-shaped Mg₂Si alloy phase having a major axis length of 0.5 µm or more is present in the Zn-Al-MgZn₂ ternary eutectic alloy structure at a number density of 1000/mm² or less.

### (Advantageous Effect)

According to the present disclosure, it is possible to provide a Zn-Al-Mg-Si coated steel sheet that has excellent appearance-related corrosion resistance and dissimilar joined portion corrosion resistance at contact areas between a flat part or a worked portion and an aluminum alloy.

### BRIEF DESCRIPTION OF THE DRAWINGS

In the accompanying drawings:

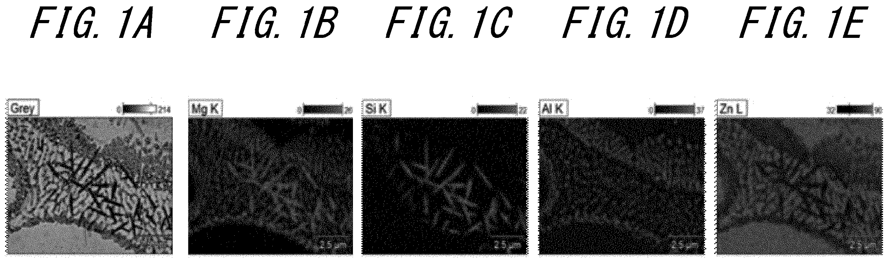

FIG. 1A is a reflected electron image at a magnification of 5000 times obtained by irradiating a surface of a coated layer with an electron beam at an accelerating voltage of 7.0 kV according to an Example of the present disclosure, and FIG. 1B to FIG. 1E illustrate Mg distribution, Si distribution, Al distribution, and Zn distribution, respectively, obtained by composition analysis using EDS.

### DETAILED DESCRIPTION

The following is a description of an embodiment of the Zn-Al-Mg-Si coated steel sheet according to the present disclosure. The embodiment described below is an example embodiment of the present disclosure, and does not limit configuration to the specific example described.

A Zn-Al-Mg-Si coated steel sheet according to an embodiment of the present disclosure includes a base steel sheet and a coated layer formed on at least one surface of the base steel sheet. The coated layer has a chemical composition containing, in mass%, Mg: 0.50 % to 3.00 %, Al: 0.10 % to 3.00 %, Si: 0.010 % to 0.20 %, and Fe: 0.30 % or less, with the balance being Zn and inevitable impurity, and a Zn-Al-MgZn₂ ternary eutectic alloy structure. Further, in a reflected electron image at a magnification of 5000 times obtained by irradiating a surface of the coated layer with an electron beam at an accelerating voltage of 7.0 kV using a scanning electron microscope, needle-shaped Mg₂Si alloy phase having a major axis length of 0.5 µm or more is present in the Zn-Al-MgZn₂ ternary eutectic alloy structure at a number density of 100,000/mm² or more.

There is no particular limitation on the type of the base steel sheet used according to the present disclosure, and for example, a hot-rolled steel sheet or hot-rolled steel strip that has been pickled and descaled, or a cold-rolled steel sheet or cold-rolled steel strip obtained by cold rolling a hot-rolled steel sheet or hot-rolled steel strip that has been pickled and descaled may be used. There is no particular limitation on the thickness of the base steel sheet. The thickness of the base steel sheet is preferably 0.7 mm or more. The thickness of the base steel sheet is preferably 2.0 mm or less.

Next, the chemical composition of the Zn-Al-Mg-Si coated layer according to the present disclosure is described.

When the Mg content in the coated layer is less than 0.50 mass%, an effect of improving the dissimilar joined portion corrosion resistance at contact areas between a flat part or a worked portion and aluminum alloy is insufficient. The Mg content in the coated layer is therefore 0.50 mass% or more. The Mg content in the coated layer is preferably 1.00 mass% or more. On the other hand, when the Mg content in the coated layer exceeds 3.00 mass%, brittle, blocky MgZn₂ phase is formed, which makes the coated layer brittle and decreases adhesion, and workability and corrosion resistance of a worked portion may be degraded. The Mg content in the coated layer is therefore 3.00 mass% or less. The Mg content in the coated layer is preferably 2.50 mass% or less.

When the Al content in the coated layer is less than 0.10 mass%, an effect of improving the dissimilar joined portion corrosion resistance at contact areas between a flat part or a worked portion and aluminum alloy is insufficient. The Al content in the coated layer is therefore 0.10 mass% or more. The Al content in the coated layer is preferably 0.50 mass% or more. On the other hand, when the Al content in the coated layer exceeds 3.00 mass%, blisters occurring from scratches after further coating of the coated steel sheet become large, and the appearance-related corrosion resistance degrades. The Al content in the coated layer is therefore 3.00 mass% or less. The Al content in the coated layer is preferably 2.00 mass% or less.

When the content of Si in the coated layer is 0.010 mass% or more, Si together with Mg forms an Mg₂Si alloy phase in the coated layer, which contributes to improving the corrosion resistance of the coated layer. This is believed to be due to the following action. That is, the Mg₂Si alloy phase is active, and therefore reacts with water in a corrosion environment and decomposes, and sacrificially protects a metallic microstructure containing one or more of a Zn phase, an Al phase, and a MgZn₂ alloy phase in a Zn-Al-MgZn₂ ternary eutectic alloy coating structure described later. At the same time, the resulting Mg corrosion products form a protective film that inhibits further progress of corrosion. This improves the dissimilar joined portion corrosion resistance where a flat part or a worked portion come into contact with an aluminum alloy. In order to obtain the effects described above, the Si content in the coated layer is 0.010 mass% or more. The Si content in the coated layer is preferably 0.050 mass% or more. On the other hand, when the Si content in the coated layer exceeds 0.20 mass%, a large amount of Mg₂Si alloy phase is formed even inside the coated layer. The Mg₂Si alloy phase is brittle, and therefore when a large amount is formed inside the coated layer, this induces cracks inside the coated layer in response to external stress. As a result, the coated layer is easily cracked via working, and the dissimilar joined portion corrosion resistance at contact points between a worked portion and an aluminum alloy is decreased. The Si content in the coated layer is therefore 0.20 mass% or less. The Si content in the coated layer is preferably 0.15 mass% or less.

When the Fe content in the coated layer exceeds 0.30 mass%, the growth of an alloy layer formed at the interface between the base steel sheet and the coated layer increases, resulting in decreased workability. The Fe content in the coated layer is therefore 0.30 mass% or less. The Fe content in the coated layer is preferably 0.20 mass% or less. On the other hand, a lower limit of the Fe content in the coated layer is not particularly limited, and may be 0.00 mass%.

The balance of the chemical composition of the coated layer other than the above consists of Zn and inevitable impurity.

The following describes the microstructure of the Zn-Al-Mg-Si coated layer. The coated layer according to the present disclosure has a Zn-Al-MgZn₂ ternary eutectic alloy coating structure, and contains Mg₂Si alloy phase in the coating structure. The coating structure may further contain Zn phase, Al phase, or MgZn₂ alloy phase.

Mg₂Si alloy phase in the Zn-Al-Mg-Si coated layer contributes to improving corrosion resistance, but when present in large amounts inside the coated layer, stress concentration occurs in the Mg₂Si alloy phase when external stress is applied, accelerating generation and growth of cracks and decreasing post-working corrosion resistance. The Mg₂Si alloy phase is therefore preferably present in the vicinity of the surface layer of the coated layer. For this purpose, it is necessary to control the Si content in the coating bath composition and to use a wiping gas having a reducing property. When such control is insufficient, the Mg₂Si alloy phase may be small in the surface layer of the coated layer, degrading the corrosion resistance, or may be formed in large amounts even inside the coated layer, decreasing the post-working corrosion resistance.

According to the present disclosure, the Mg₂Si alloy phase being "formed in the surface layer of the coated layer" means that, in a reflected electron image at a magnification of 5000 times obtained by irradiating a surface of the coated layer with an electron beam at an accelerating voltage of 7.0 kV using a scanning electron microscope, needle-shaped Mg₂Si alloy phase having a major axis length of 0.5 µm or more is observed in the Zn-Al-MgZn₂ ternary eutectic alloy structure. In order to obtain the corrosion resistance improving effect of the Mg₂Si alloy phase, the number density of the Mg₂Si alloy phase formed in the surface layer of the coated layer is 100,000/mm² or more. The number density of the Mg₂Si alloy phase formed in the surface layer of the coated layer is preferably 150,000/mm² or more. The number density of the Mg₂Si alloy phase formed in the surface layer of the coated layer is preferably 200,000/mm² or more. On the other hand, there is no upper limit to the number density of the Mg₂Si alloy phase formed in the surface layer of the coated layer. However, even when an appropriate wiping gas is used, it is difficult to make the number density of the coated layer produced using the coating bath composition according to the present disclosure exceed 650,000/mm², and therefore the number density is normally 650,000/mm² or less.

According to the present disclosure, the Mg₂Si alloy phase being "formed inside the coated layer" means that, in a reflected electron image at a magnification of 5000 times obtained by irradiating a surface of the coated layer with an electron beam at an accelerating voltage of 15.0 kV using a scanning electron microscope, needle-shaped Mg₂Si alloy phase having a major axis length of 0.5 µm or more is observed in the Zn-Al-MgZn₂ ternary eutectic alloy structure. When the number density of the Mg₂Si alloy phase formed inside the coated layer is 1000/mm² or less, favorable post-working corrosion resistance is obtainable. The number density of the Mg₂Si alloy phase formed inside the coated layer is therefore preferably 1000/mm² or less. The number density of the Mg₂Si alloy phase formed inside the coated layer is more preferably 750/mm² or less. The number density of the Mg₂Si alloy phase formed inside the coated layer is even more preferably 500/mm² or less. The number density of the Mg₂Si alloy phase formed inside the coated layer is most preferably 0/mm².

FIG. 1A to FIG. 1E illustrate reflected electron images (at 5000 times magnification) and EDS analysis results observed when a surface of the coated layer of the Zn-Al-Mg-Si coated steel sheet produced according to an embodiment of the present disclosure was irradiated with an electron beam at an accelerating voltage of 7.0 kV using a scanning electron microscope. FIG. 1A is a reflected electron image of the Zn-Al-Mg-Si coated layer, and FIG. 1B to FIG. 1E are the Mg distribution, Si distribution, Al distribution, and Zn distribution, respectively, obtained by composition analysis using EDS. As indicated in FIG. 1A to FIG. 1E, the Mg₂Si alloy phase has a needle-like shape overlapping with Mg and Si compositions, and is found to be in the Zn-Al-MgZn₂ ternary eutectic alloy structure.

### [Method of producing Zn-Al-Mg-Si coated steel sheet]

Next, a method of producing a Zn-Al-Mg-Si coated steel sheet according to an embodiment of the present disclosure is described. The method of producing a Zn-Al-Mg-Si coated steel sheet according to an embodiment of the present disclosure includes: a process of immersing a base steel sheet in a coating bath having a composition containing, in mass%, Mg: 0.50 % to 3.00 %, Al: 0.10 % to 3.00 %, Si: 0.010 % to 0.20 %, and Fe: 0.30 % or less, with the balance being Zn and inevitable impurity, thereby subjecting the base steel sheet to a coating treatment; and, after the coating treatment, a process of subjecting the base steel sheet to gas wiping, thereby adjusting the coating weight of a coated layer formed on the base steel sheet. Further, the gas wiping is carried out by spraying a mixed gas of H₂ and N₂ onto the base steel sheet. A method of cooling the coated steel sheet after the gas wiping is not particularly limited, and various methods such as air cooling, air-water cooling, and water cooling may be used.

In the method of producing a Zn-Al-Mg-Si coated steel sheet according to the present disclosure, the base steel sheet to be coated is the same base steel sheet as described above.

When an annealing heat treatment is carried out on a base steel sheet before coating treatment and the H₂ concentration in the furnace atmosphere during annealing is 1 vol% or more, oxides at the base steel sheet surface can be suitably reduced. The H₂ concentration in the furnace atmosphere during annealing is therefore preferably 1 vol% or more. On the other hand, when the H₂ concentration in the furnace atmosphere during annealing is 10 vol% or less, production costs can be suitably suppressed. The H₂ concentration in the furnace atmosphere during annealing is therefore preferably 10 vol% or less. Further, the furnace atmosphere during annealing is preferably a mixed gas containing H₂ with the balance being N₂. Temperature of the annealing heat treatment is not particularly limited. The temperature of the annealing heat treatment is preferably 600 °C or more. The temperature of the annealing heat treatment is preferably 850 °C or less. Further, duration of the annealing heat treatment is not particularly limited. The duration of the annealing heat treatment is preferably 10 s or longer. The duration of the annealing heat treatment is preferably 60 s or less.

The coating bath used in the production of a Zn-Al-Mg-Si coated steel sheet according to the present disclosure has a composition containing, in mass%, Mg: 0.50 % to 3.00 %, Al: 0.10 % to 3.00 %, Si: 0.010 % to 0.20 %, and Fe: 0.30 % or less, with the balance being Zn and inevitable impurity. The explanation for each component in the coating bath is the same as the explanation of each component of the coated layer described above. The chemical composition of the coating bath is equivalent to the chemical composition of the applied coated layer.

From the viewpoint of corrosion resistance, the coating weight of the coated layer in the coating treatment is preferably 15 g/m² or more. The coating weight of the coated layer in the coating treatment is more preferably 30 g/m² or more. On the other hand, when the coating weight of the coated layer is 100 g/m² or less, production cost can be suitably suppressed, and therefore the coating weight of the coated layer is preferably 100 g/m² or less. Further, temperature of the coating bath during the coating treatment is preferably 430 °C or more. The temperature of the coating bath during the coating treatment is preferably 540 °C or less. When the temperature of the coating bath is less than 430 °C, fluidity of the coating bath decreases, which may hinder uniform coating coverage. For this reason, the temperature of the coating bath is preferably 430 °C or more. On the other hand, when the temperature of the coating bath exceeds 540 °C, there is a risk of an increase in oxides at the surface of the coating bath due to oxidation of Mg in the coating bath, and erosion of refractory material in the coating bath by Al and Mg. For these reasons, the temperature of the coating bath is preferably 540 °C or less. The temperature of the coating bath is more preferably 530 °C or less.

In order to form the Mg₂Si alloy phase in the surface layer of the coated layer and not to form a large amount inside the coated layer, it is important that the wiping gas has a reducing property. The gas wiping of the present disclosure is therefore carried out by spraying a mixed gas of H₂ and N₂ onto the base steel sheet. Conventionally, in the production of hot-dip galvanized steel sheets, air or N₂ gas has been used as a wiping gas from the viewpoint of economy. The inventors have found that, particularly in the production of the Zn-Al-Mg-Si coated steel sheet of the present disclosure that contains Si, the surface layer of the coating is oxidized by O₂ contained in the wiping gas, and as a result, desired corrosion resistance might not be obtained. As a result of intensive studies into improving the corrosion resistance of the coating, the inventors have found that the lower the H₂ concentration in the wiping gas, the more difficult it is to suppress the generation of oxides at the surface of the base steel sheet, and as a result, the oxides generated at the surface of the base steel sheet hinder formation of the Mg₂Si alloy phase in the surface layer of the coating layer and promote formation inside the coating layer.

When the H₂ concentration of the wiping gas is 1 vol% or more, the Mg₂Si alloy phase is suitably formed in the surface layer of the coated layer, and the effect of contributing to improvement of corrosion resistance is suitably obtained. The H₂ concentration of the wiping gas is therefore preferably 1 vol% or more. Further, when the H₂ concentration of the wiping gas is 5 vol% or more, the generation of oxides at the surface of the base steel sheet is suitably suppressed, and the Mg₂Si alloy phase is formed in the surface layer of the coated layer, and the formation of the Mg₂Si alloy phase inside the coated layer is suitably suppressed. On the other hand, when the H₂ concentration of the wiping gas is 10 vol% or less, production cost can be suitably suppressed. The H₂ concentration of the wiping gas is therefore preferably 10 vol% or less. The wiping is preferably carried out in an air environment.

For processes and conditions not described herein, conventional methods may be used.

### EXAMPLES

Using an extremely low carbon cold-rolled steel sheet having a thickness of 0.8 mm as a base steel sheet, all of the Zn-Al-Mg-Si coated steel sheets serving as samples were produced using a hot-dip coating apparatus. Each sample was coated using variously changed coating bath compositions, and the coating bath temperature was set to 450 °C, which is 30 °C higher than a solidification start temperature estimated from a Zn-Al-Mg-Si quaternary phase equilibrium diagram. The base steel sheet was heated in an H₂ (5 vol%) + N₂ atmosphere, the temperature of the base steel sheet when immersed in the coating bath was set to the same temperature as the coating bath temperature, and hot-dip coating was carried out in the coating bath for 1 s. Thereafter, the thickness of the coated layer was controlled to 7 µm (equivalent to 50 g/m²) by adjusting the flow rate of the wiping gas. Table 1 lists the coating bath composition, the wiping gas composition, and the coated layer composition. The wiping was carried out in an air environment.

### [Table 1]

**Table 1**

| No. | Coating bath composition (mass%) | | | | | Wiping gas (vol%) | Coated layer composition (mass%) | | | | | Ternary eutectic alloy | Mg₂Si | | Evaluation | | | Remarks |
|---|---|---|---|---|---|---|---|---|---|---|---|---|---|---|---|---|---|---|
| | Zn | Al | Mg | Si | Fe | | Zn | Al | Mg | Si | Fe | | Number density observation at 7.0 kV (per mm²) | Number density observation at 15.0 kV (per mm²) | Appearance -related corrosion resistance | Flat part dissimilar joined portion corrosion resistance | Worked portion dissimilar joined portion corrosion resistance | |
| 1 | 97.25 | 1.50 | 1.00 | 0.05 | 0.20 | N₂+5%H₂ | 97.25 | 1.50 | 1.00 | 0.05 | 0.20 | Yes | 208000 | 0 | ⊚ | ⊚ | ⊚ | Example |
| 2 | 97.95 | 1.50 | 0.30 | 0.05 | 0.20 | N₂+5%H₂ | 97.95 | 1.50 | **0.30** | 0.05 | 0.20 | Yes | **80000** | 0 | ⊚ | Δ | Δ | **Comparative Example** |
| 3 | 98.15 | 1.50 | 0.10 | 0.05 | 0.20 | N₂+5%H₂ | 98.15 | 1.50 | **0.10** | 0.05 | 0.20 | Yes | **16000** | 0 | ⊚ | Δ | Δ | **Comparative Example** |
| 4 | 97.65 | 1.50 | 0.60 | 0.05 | 0.20 | N₂+5%H₂ | 97.65 | 1.50 | 0.60 | 0.05 | 0.20 | Yes | 128000 | 0 | ⊚ | ○ | ○ | Example |
| 5 | 97.40 | 1.50 | 0.85 | 0.05 | 0.20 | N₂+5%H₂ | 97.40 | 1.50 | 0.85 | 0.05 | 0.20 | Yes | 176000 | 0 | ⊚ | ⊚ | ⊚ | Example |
| 6 | 96.75 | 1.50 | 1.50 | 0.05 | 0.20 | N₂+5%H₂ | 96.75 | 1.50 | 1.50 | 0.05 | 0.20 | Yes | 232000 | 0 | ⊚ | ⊚ | ⊚ | Example |
| 7 | 96.25 | 1.50 | 2.00 | 0.05 | 0.20 | N₂+5%H₂ | 96.25 | 1.50 | 2.00 | 0.05 | 0.20 | Yes | 376000 | 0 | ⊚ | ⊚ | ⊚ | Example |
| 8 | 95.45 | 1.50 | 2.80 | 0.05 | 0.20 | N₂+5%H₂ | 95.45 | 1.50 | 2.80 | 0.05 | 0.20 | Yes | 384000 | 0 | ⊚ | ⊚ | ⊚ | Example |
| 9 | 95.05 | 1.50 | 3.20 | 0.05 | 0.20 | N₂+5%H₂ | 95.05 | 1.50 | **3.20** | 0.05 | 0.20 | Yes | 392000 | 0 | ⊚ | ⊚ | Δ | **Comparative Example** |
| 10 | 93.25 | 1.50 | 5.00 | 0.05 | 0.20 | N₂+5%H₂ | 93.25 | 1.50 | **5.00** | 0.05 | 0.20 | Yes | 400000 | 0 | ⊚ | ⊚ | × | **Comparative Example** |
| 11 | 98.25 | 1.50 | 0.00 | 0.05 | 0.20 | N₂+5%H₂ | 98.25 | 1.50 | **0.00** | 0.05 | 0.20 | **No** | **0** | 0 | ⊚ | × | × | **Comparative Example** |
| 12 | 97.25 | 1.50 | 1.00 | 0.05 | 0.20 | N₂+10%H₂ | 97.25 | 1.50 | 1.00 | 0.05 | 0.20 | Yes | 216000 | 0 | ⊚ | ⊚ | ⊚ | Example |
| 13 | 97.25 | 1.50 | 1.00 | 0.05 | 0.20 | N₂+7%H₂ | 97.25 | 1.50 | 1.00 | 0.05 | 0.20 | Yes | 216000 | 0 | ⊚ | ⊚ | ⊚ | Example |
| 14 | 97.25 | 1.50 | 1.00 | 0.05 | 0.20 | N₂+3%H₂ | 97.25 | 1.50 | 1.00 | 0.05 | 0.20 | Yes | 120000 | 5 | ⊚ | ○ | ○ | Example |
| 15 | 97.25 | 1.50 | 1.00 | 0.05 | 0.20 | N₂+1%H₂ | 97.25 | 1.50 | 1.00 | 0.05 | 0.20 | Yes | 112000 | 8 | ⊚ | ○ | ○ | Example |
| 16 | 97.25 | 1.50 | 1.00 | 0.05 | 0.20 | N₂+0.5%H₂ | 97.25 | 1.50 | 1.00 | 0.05 | 0.20 | Yes | **64000** | 25 | ⊚ | △ | Δ | **Comparative Example** |
| 17 | 97.25 | 1.50 | 1.00 | 0.05 | 0.20 | N₂ | 97.25 | 1.50 | 1.00 | 0.05 | 0.20 | Yes | **24000** | 50 | ⊚ | Δ | Δ | **Comparative Example** |
| 18 | 97.25 | 1.50 | 1.00 | 0.05 | 0.20 | air | 97.25 | 1.50 | 1.00 | 0.05 | 0.20 | Yes | **0** | 2400 | ⊚ | × | × | **Comparative Example** |
| 19 | 97.29 | 1.50 | 1.00 | 0.01 | 0.20 | N₂+5%H₂ | 97.29 | 1.50 | 1.00 | **0.01** | 0.20 | Yes | **8000** | 0 | ⊚ | △ | Δ | **Comparative Example** |
| 20 | 97.29 | 1.50 | 1.00 | 0.01 | 0.20 | N₂+5%H₂ | 97.29 | 1.50 | 1.00 | 0.01 | 0.20 | Yes | 104000 | 0 | ⊚ | ○ | ○ | Example |
| 21 | 97.27 | 1.50 | 1.00 | 0.04 | 0.20 | N₂+5%H₂ | 97.27 | 1.50 | 1.00 | 0.04 | 0.20 | Yes | 112000 | 0 | ⊚ | ○ | ○ | Example |
| 22 | 97.15 | 1.50 | 1.00 | 0.15 | 0.20 | N₂+5%H₂ | 97.15 | 1.50 | 1.00 | 0.15 | 0.20 | Yes | 376000 | 20 | ⊚ | ⊚ | ⊚ | Example |
| 23 | 97.15 | 1.50 | 1.00 | 0.15 | 0.20 | N₂+3%H₂ | 97.15 | 1.50 | 1.00 | 0.15 | 0.20 | Yes | 224000 | 60 | ⊚ | ⊚ | ⊚ | Example |
| 24 | 97.15 | 1.50 | 1.00 | 0.15 | 0.20 | N₂+1%H₂ | 97.15 | 1.50 | 1.00 | 0.15 | 0.20 | Yes | 112000 | 120 | ⊚ | ○ | ○ | Example |
| 25 | 94.61 | 2.50 | 2.50 | 0.19 | 0.20 | N₂+0.3%H₂ | 94.61 | 2.50 | 2.50 | 0.19 | 0.20 | Yes | 112000 | 1010 | ○ | ○ | ○ | Example |
| 26 | 97.15 | 1.50 | 1.00 | 0.15 | 0.20 | N₂+0.5%H₂ | 97.15 | 1.50 | 1.00 | 0.15 | 0.20 | Yes | 104000 | 250 | ⊚ | ○ | ○ | Example |
| 27 | 97.01 | 1.50 | 1.10 | 0.19 | 0.20 | N₂+5%H₂ | 97.11 | 1.50 | 1.00 | 0.19 | 0.20 | Yes | 400000 | 450 | ⊚ | ⊚ | ⊚ | Example |
| 28 | 97.11 | 1.50 | 1.00 | 0.19 | 0.20 | N₂+3%H₂ | 97.11 | 1.50 | 1.00 | 0.19 | 0.20 | Yes | 128000 | 520 | ⊚ | ○ | ○ | Example |
| 29 | 97.11 | 1.50 | 1.00 | 0.19 | 0.20 | N₂+1%H₂ | 97.11 | 1.50 | 1.00 | 0.19 | 0.20 | Yes | 136000 | 560 | ⊚ | ○ | ○ | Example |
| 30 | 97.11 | 1.50 | 1.00 | 0.19 | 0.20 | N₂+0.5%H₂ | 97.11 | 1.50 | 1.00 | 0.19 | 0.20 | Yes | 144000 | 650 | ⊚ | ○ | ○ | Example |
| 31 | 97.13 | 1.50 | 1.00 | 0.17 | 0.20 | N₂+0.5%H₂ | 97.13 | 1.50 | 1.00 | 0.17 | 0.20 | Yes | 112000 | 550 | ⊚ | ○ | ○ | Example |
| 32 | 97.13 | 1.50 | 1.00 | 0.17 | 0.20 | N₂+0.5%H₂ | 97.13 | 1.50 | 1.00 | 0.17 | 0.20 | Yes | 120000 | 750 | ⊚ | ○ | ○ | Example |
| 33 | 97.08 | 1.50 | 1.00 | 0.22 | 0.20 | N₂+5%H₂ | 97.07 | 1.50 | 1.00 | **0.23** | 0.20 | Yes | 480000 | 1050 | ⊚ | ⊚ | △ | **Comparative Example** |
| 34 | 96.75 | 1.50 | 1.05 | 0.50 | 0.20 | N₂+5%H₂ | 96.80 | 1.50 | 1.00 | **0.50** | 0.20 | Yes | 640000 | 2500 | ⊚ | ⊚ | × | **Comparative Example** |
| 35 | 97.30 | 1.50 | 1.00 | 0.00 | 0.20 | N₂+5%H₂ | 97.30 | 1.50 | 1.00 | 0.00 | 0.20 | Yes | **0** | 0 | ⊚ | × | × | **Comparative Example** |
| 36 | 97.15 | 1.50 | 1.00 | 0.15 | 0.20 | N₂ | 97.15 | 1.50 | 1.00 | 0.15 | 0.20 | Yes | **48000** | 250 | ⊚ | △ | △ | **Comparative Example** |
| 37 | 97.07 | 1.50 | 1.00 | 0.23 | 0.20 | N₂ | 97.07 | 1.50 | 1.00 | **0.23** | 0.20 | Yes | **80000** | 1500 | ⊚ | △ | × | **Comparative Example** |
| 38 | 98.67 | 0.08 | 1.00 | 0.05 | 0.20 | N₂+5%H₂ | 98.67 | **0.08** | 1.00 | 0.05 | 0.20 | Yes | **88000** | 0 | ⊚ | △ | △ | **Comparative Example** |
| 39 | 98.63 | 0.12 | 1.00 | 0.05 | 0.20 | N₂+5%H₂ | 98.63 | 0.12 | 1.00 | 0.05 | 0.20 | Yes | 168000 | 0 | ⊚ | ⊚ | ⊚ | Example |
| 40 | 98.25 | 0.50 | 1.00 | 0.05 | 0.20 | N₂+5%H₂ | 98.25 | 0.50 | 1.00 | 0.05 | 0.20 | Yes | 176000 | 0 | ⊚ | ⊚ | ⊚ | Example |
| 41 | 97.75 | 1.00 | 1.00 | 0.05 | 0.20 | N₂+5%H₂ | 97.75 | 1.00 | 1.00 | 0.05 | 0.20 | Yes | 184000 | 0 | ⊚ | ⊚ | ⊚ | Example |
| 42 | 96.75 | 2.00 | 1.00 | 0.05 | 0.20 | N₂+5%H₂ | 96.75 | 2.00 | 1.00 | 0.05 | 0.20 | Yes | 208000 | 0 | ⊚ | ⊚ | ⊚ | Example |
| 43 | 95.95 | 2.80 | 1.00 | 0.05 | 0.20 | N₂+5%H₂ | 95.95 | 2.80 | 1.00 | 0.05 | 0.20 | Yes | 208000 | 0 | ○ | ⊚ | ⊚ | Example |
| 44 | 95.65 | 3.10 | 1.00 | 0.05 | 0.20 | N₂+5%H₂ | 95.55 | **3.20** | 1.00 | 0.05 | 0.20 | Yes | 200000 | 0 | △ | ⊚ | ⊚ | **Comparative Example** |
| 45 | 93.75 | 5.00 | 1.00 | 0.05 | 0.20 | N₂+5%H₂ | 93.75 | **5.00** | 1.00 | 0.05 | 0.20 | Yes | 216000 | 0 | × | ⊚ | ⊚ | **Comparative Example** |
| 46 | 98.75 | 0.00 | 1.00 | 0.05 | 0.20 | N₂+5%H₂ | 98.75 | **0.00** | 1.00 | 0.05 | 0.20 | **No** | **0** | 0 | ⊚ | × | × | **Comparative Example** |

Each sample of the obtained Zn-Al-Mg-Si coated steel sheet was sheared to a size of 10 mm × 20 mm. The coated layer of the sample after shearing was observed from a surface direction of the coated steel sheet using a scanning electron microscope to confirm the presence or absence of a Zn-Al-MgZn₂ ternary eutectic alloy structure. When the composition analysis by EDS during the observation indicated that there was a structure composed of three phases, Zn phase, Al phase, and MgZn₂ alloy phase, and when the same surface was analyzed by XRD and the Zn-Al-MgZn₂ ternary eutectic alloy structure was present, then "Yes" was recorded. When the composition analysis by EDS during the observation indicated that there was no structure composed of three phases, Zn phase, Al phase, and MgZn₂ alloy phase, and when the same surface was analyzed by XRD and any of the Zn phase, Al phase, and MgZn₂ alloy phase was not confirmed, the Zn-Al-MgZn₂ crystal structure was absent, and "No" was recorded in Table 1.

The coated layer of the sample after shearing was observed from a surface direction of the coated steel sheet using a scanning electron microscope to observe the state of the Mg₂Si alloy phase present in the surface layer and inside the coated layer, and number density was evaluated. The number density of the Mg₂Si alloy phase present in the surface layer of the coated layer was evaluated from a reflected electron image (at 5000 times magnification) observed when irradiating the coated layer with an electron beam at an accelerating voltage of 7.0 kV. The number density of the Mg₂Si alloy phase present inside the coated layer was evaluated from a reflected electron image (at 5000 times magnification) observed when irradiating the coated layer with an electron beam at an accelerating voltage of 15.0 kV.

### [Appearance-related corrosion resistance]

Next, in order to evaluate the appearance-related corrosion resistance of the obtained Zn-Al-Mg-Si coated steel sheets after further coating, each sample was sheared to a size of 70 mm × 80 mm, and then phosphate treatment was carried out under the same conditions, followed by electrodeposition coating (the coating thickness was constant at 15 µm). Cut scratches were made on the coated surface with a blade in the shape of a cross, and then a corrosion test was carried out. At this time, the depth of the blade was made to reach the surface of the steel substrate. After carrying out 90 cycles of corrosion testing according to SAE J2334 (2016), blister width from the cross-cut scratch on the coated surface was measured and evaluated based on the maximum blister width. When the blister width was less than 3 mm, this was marked as "⊚", when the blister width was 3 mm or more and less than 5 mm, this was marked as "O", when the blister width was 5 mm or more and less than 7 mm, this was marked as "△", and when the blister width was 7 mm or more, this was marked as "×". An evaluation of ⊚ or ○ was considered a pass, and an evaluation of △ or × was considered a fail.

### [Flat part dissimilar joined portion corrosion resistance]

Next, in order to evaluate the flat part dissimilar joined portion corrosion resistance of the Zn-Al-Mg-Si coated steel sheets, each sample was sheared to a size of 80 mm × 80 mm, and then bolted to an Al alloy (A6061, Al-0.6Si-1Mg) that had been sheared to a size of 40 mm × 40 mm, thereby producing flat part dissimilar joined portion samples of the Zn-Al-Mg-Si coated steel sheets and the Al alloy. At this time, the surfaces other than the mating surfaces were covered with resin tape. The dissimilar joined portion samples were then subjected to a corrosion test according to SAE J2334 (2016). After 20 cycles of the corrosion test, the corrosion loss of the Al alloy was evaluated. The Al corrosion loss was measured in accordance with ISO 8407:2021 by immersing a flat part dissimilar joined portion sample in a 60 mass% aqueous nitric acid solution at room temperature to remove corrosion products mainly composed of aluminum, and calculating the difference between the weight before the test and the weight after the corrosion products were removed. In Table 1, the corrosion loss was indicated as "⊚" when less than 5 g/m², "O" when 5 g/m² or more and less than 10 g/m², "△" when 10 g/m² or more and less than 15 g/m², and "×" when 15 g/m² or more. An evaluation of ⊚ or O was considered a pass, and an evaluation of △ or × was considered a fail.

### [Worked portion dissimilar joined portion corrosion resistance]

Next, the worked portion dissimilar joined portion corrosion resistance of the Zn-Al-Mg-Si coated steel sheets was evaluated. Each sample was sheared to a size of 70 mm × 120 mm, and mechanically joined at two points by mechanical clinching (5 mm diameter) to an Al alloy that had been sheared to a size of 40 mm × 90 mm to provide a worked portion, thereby producing a worked portion dissimilar joined portion sample of a Zn-Al-Mg-Si coated steel sheet and an Al alloy. In this case, the surfaces other than the mating surfaces were phosphate-treated under the same conditions, and then subjected to electrodeposition coating (with a constant coating thickness of 15 µm) to cover them. The worked portion dissimilar joined portion samples were then subjected to a corrosion test according to SAE J2334 (2016). After 20 cycles of the corrosion test, the corrosion loss of the Al alloy was evaluated. The Al corrosion loss was measured in accordance with ISO 8407:2021 by immersing a worked portion dissimilar joined portion sample in a 60 mass% aqueous nitric acid solution at room temperature to remove corrosion products mainly composed of aluminum, and calculating the difference between the weight before the test and the weight after the corrosion products were removed. In Table 1, the corrosion loss was indicated as "⊚" when less than 5 g/m² , "O" when 5 g/m² or more and less than 10 g/m², "△" when 10 g/m² or more and less than 15 g/m², and "×" when 15 g/m² or more. An evaluation of ⊚ or O was considered a pass, and an evaluation of △ or × was considered a fail.

As indicated in Table 1, the Examples having the coating composition defined in the present disclosure and having a number density of Mg₂Si alloy phase of 100,000/mm² or more when observed at an accelerating voltage of 7.0 kV had excellent appearance-related corrosion resistance, flat part dissimilar joined portion corrosion resistance, and worked portion dissimilar joined portion corrosion resistance. That is, it was found that the presence of a large amount of Mg₂Si alloy phase in the surface layer of the coated layer is advantageous in terms of the appearance-related corrosion resistance, the flat part dissimilar joined portion corrosion resistance, and the worked portion dissimilar joined portion corrosion resistance. In particular, the Examples for which the number density of the Mg₂Si alloy phase when observed at an accelerating voltage of 15.0 kV was 500/mm² or less, that is, for which the Mg₂Si alloy phase was small inside the coated layer, demonstrated more favorable evaluation results. In contrast, the Comparative Examples outside the scope of the present disclosure were inferior to the Examples of the present disclosure in at least one of the appearance-related corrosion resistance, the flat part dissimilar joined portion corrosion resistance, and the worked portion dissimilar joined portion corrosion resistance.

### INDUSTRIAL APPLICABILITY

According to the present disclosure, it is possible to provide a Zn-Al-Mg-Si coated steel sheet that has excellent appearance-related corrosion resistance and dissimilar joined portion corrosion resistance at contact areas between a flat part or a worked part and an aluminum alloy.

## Claims

1. A Zn-Al-Mg-Si coated steel sheet comprising a base steel sheet and a coated layer formed on at least one surface of the base steel sheet, wherein
the coated layer has a chemical composition containing, in mass%, Mg: 0.50 % to 3.00 %, Al: 0.10 % to 3.00 %, Si: 0.010 % to 0.20 %, and Fe: 0.30 % or less, with the balance being Zn and inevitable impurity, and a Zn-Al-MgZn₂ ternary eutectic alloy structure, and
in a reflected electron image at a magnification of 5000 times obtained by irradiating a surface of the coated layer with an electron beam at an accelerating voltage of 7.0 kV using a scanning electron microscope, needle-shaped Mg₂Si alloy phase having a major axis length of 0.5 µm or more is present in the Zn-Al-MgZn₂ ternary eutectic alloy structure at a number density of 100,000/mm² or more.

2. The Zn-Al-Mg-Si coated steel sheet according to claim 1, wherein, in a reflected electron image at a magnification of 5000 times obtained by irradiating a surface of the coated layer with an electron beam at an accelerating voltage of 15.0 kV using a scanning electron microscope, needle-shaped Mg₂Si alloy phase having a major axis length of 0.5 µm or more is present in the Zn-Al-MgZn₂ ternary eutectic alloy structure at a number density of 1000/mm² or less.
